# FASCICULE DE BREVET EUROPEEN

(11) **EP 0 409 682 B1**
(45) Date de publication et mention de la délivrance du brevet: **02.03.1994**
(21) Numéro de dépôt: 90401870.2
(22) Date de dépôt: 28.06.1990
(51) Int. Cl.: H01S 3/00, H01S 3/30

(54) **Générateur d'impulsion laser de puissance**
Generator für Hochleistungs-Laserimpulse
High power laser pulse generator

(30) Priorité: 18.07.1989 FR 8909632
(43) Date de publication de la demande: 23.01.1991
(73) Titulaire: THOMSON-CSF, 75008 Paris (FR)
(72) Inventeur: Huignard, Jean-Pierre, F-92045 Paris La Défense (FR); Ayral Jean-Luc, F-92045 Paris La Défense (FR); Jano, Patrice, F-92045 Paris La Défense (FR)
(74) Mandataire: Guérin, Michel

(56) Documents cités:
- EP-A- 0 253 590
- FR-A- 2 586 306
- US-A- 4 394 623
- US-A- 4 529 943
- JAPANESE JOURNAL OF APPLIED PHYSICS, vol. 20, no. 12, décembre 1981, pages L877-L880; M. TANIMOTO et al.: "Laser power multiplication in a parametric frequency converter with a cavity dumper"

## Description

L'invention concerne un générateur d'impulsion laser de puissance et notamment un générateur fournissant une impulsion à partir de plusieurs impulsions.

Les lasers de puissance connus actuellement génèrent des trains d'impulsions de puissance crête encore insuffisante.

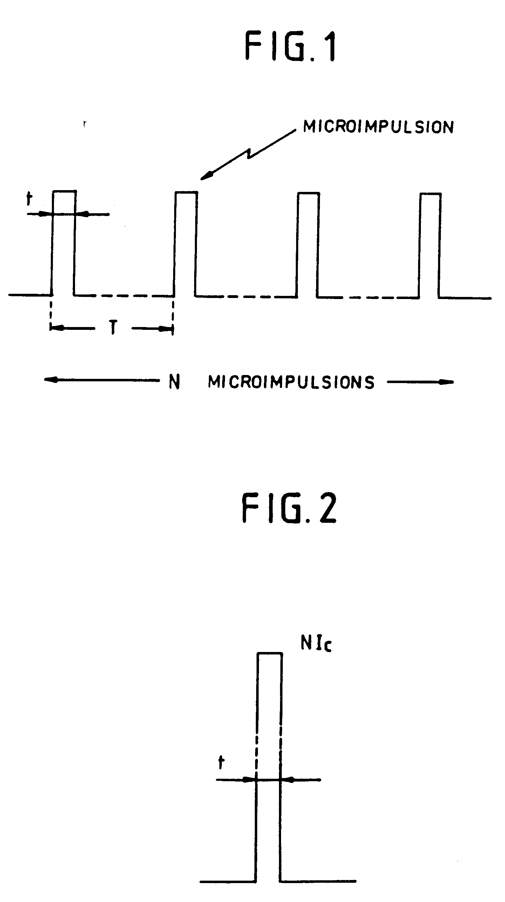

Par exemple, les impulsions émises par un laser LEL (Laser à Electrons Libres) telles que représentées en figure 1 possèdent typiquement les caractéristiques suivantes :
- Microimpulsions de t = 40 µs
- Puissance crête du micropulse : I_{c} = 200 MW
- Distance entre micropulses : T = 100 ns
- Nombre de micropulses : N = 2.10³
- Longueur d'onde : proche IR

Dans certaines applications on souhaite obtenir une puissance crête plus élevée que celle obtenue à l'aide d'un laser LEL par exemple en générant une impulsion unique mais dont l'intensité crête serait N fois l'intensité d'une impulsion (voir figure 2). N est le nombre de mocroimpulsions contenus dans l'impulsion émise par le LEL (N=10₃).

L'invention concerne un dispositif permettant d'additionner N microimpulsions d'un train d'impulsions pour fournir une impulsion unique de plus grandes impulsions.

Les moyens mis en oeuvre pour obtenir cette addition des impulsions sur une impulsion unique est compatibles avec les densités de puissance mises en jeu dans ce type de lasers. En particulier, le dispositif de l'invention exclut l'utilisation de composants qui absorbent une composante de polarisation et permet de s'adapter à des faisceaux de grand diamètre afin de réduire les densités de puissance sur les miroirs et fenêtres optiques.

L'invention concerne donc un générateur d'impulsion laser de puissance caractérisé en ce qu'il comporte :
- une source laser émettant au moins un train d'impulsions de période T ;
- une cavité optique en anneau de longueur proportionnelle à la période T du train d'impulsions ;
- un milieu non linéaire inséré dans l'anneau de la cavité optique recevant le train d'impulsions qui fait office de faisceau de pompe pour le milieu non linéaire, la lumière circulant dans la cavité faisant office de faisceau signal ;
- un commutateur électro-optique de polarisation commandé par un circuit de commande et un dispositif biréfringent intégrés dans l'anneau de la cavité optique et fonctionnant à des instants déterminés pour extraire une impulsion lumineuse de la cavité optique.

L'invention concerne aussi un générateur d'impulsion laser de puissance caractérisé en ce qu'il comporte :
- une source laser émettant au moins un train d'impulsions de période T ;
- une cavité optique en anneau de longueur proportionnelle à la période T du train d'impulsions ;
- un milieu non linéaire inséré dans l'anneau de la cavité optique recevant le train d'impulsions qui fait office de faisceau de pompe pour le milieu non linéaire, la lumière circulant dans la cavité faisant office de faisceau signal ;
- un commutateur optique recevant les impulsions de la source et les retransmettant, sous la commande d'un circuit de commande, au milieu non linéaire sous un angle tel que ces impulsions tiennent lieu de faisceau signal et tandis que des impulsions circulant dans la cavité optique tiennent lieu de faisceau pompe, un transfert d'énergie ayant alors lieu des impulsions de la cavité vers les impulsions de la source.

L'invention concerne également un générateur d'impulsion laser de puissance caractérisé en ce qu'il comporte :
- une source laser émettant au moins un train d'impulsions de période T ;
- une cavité optique en anneau de longueur proportionnelle à la période T du train d'impulsions ;
- un milieu non linéaire inséré dans l'anneau de la cavité optique recevant le train d'impulsions qui fait office de faisceau de pompe pour le milieu non linéaire, la lumière circulant dans la cavité faisant office de faisceau signal ;
- une source laser supplémentaire émettant des impulsions laser vers le milieu non linéaire sous un angle tel que ces impulsions tiennent lieu de faisceau signal et que les impulsions circulant dans la cavité optique tiennent lieu de faisceau pompe, un circuit de commande commandant sélectivement la source laser et la source laser supplémentaire.

Différents objets et caractéristiques de l'invention apparaîtront plus clairement dans la description qui va suivre faite à titre d'exemple en se reportant aux figures annexées qui représentent :
- la figure 1, un diagramme de train d'impulsions émises par un laser LEL ;
- la figure 2, une impulsion unique émise selon le laser de l'invention ;
- la figure 3, un exemple de réalisation du laser selon l'invention ;
- les figures 4 et 5, des modes de fonctionnement du dispositif de la figure 3 ;
- la figure 6, un exemple de diagramme d'amplification du dispositif de l'invention ;
- les figures 7 et 8, des variantes de réalisation du dispositif de l'invention.

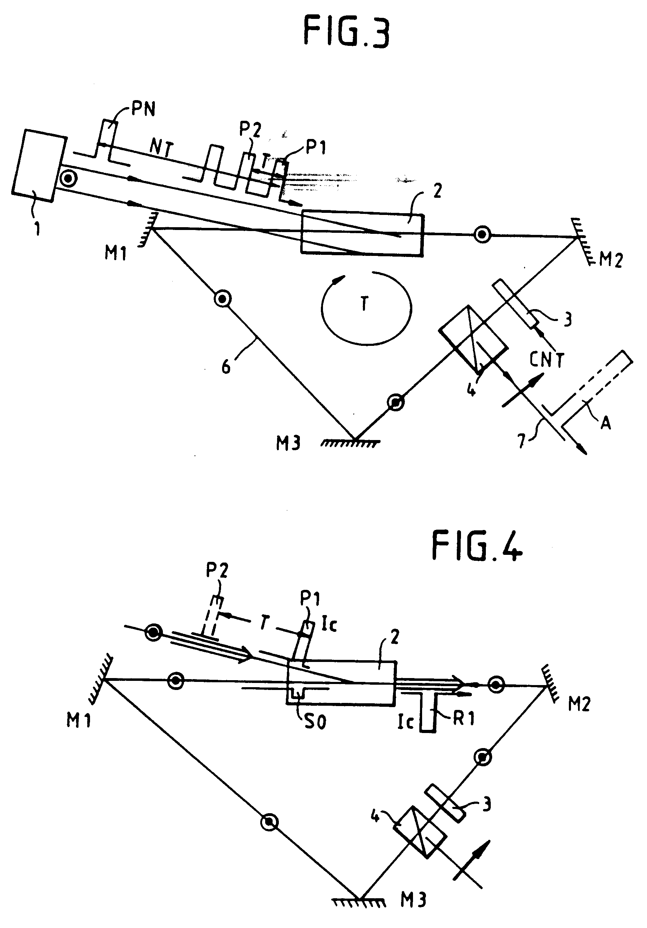

Le dispositif faisant l'objet de l'invention est présenté sur la figure 3. Il utilise les principaux composants suivants :
- une source lumineuse 1 émettant un train d'impulsions ;
- une cavité en anneau 6 ;
- un milieu non linéaire 2 du type cellule à gaz type Raman (non linéarité d'ordre 3) ;
- un commutateur électro-optique 3, 4, de polarisation permettant d'extraire l'impulsion de la cavité.

La source lumineuse émet un train d'impulsions de lumière polarisée linéairement. Comme cela est indiqué sur la figure 3, cette polarisation linéaire est orientée selon une direction indiquée par le signe représenté par un cercle contenant un point.

Ce train d'impulsions comporte N impulsions de période T et de durée t. La durée totale d'un train d'impulsions est NT.

La cavité en anneau 6 a pur longueur de trajet optique une longueur telle qu'une impulsion lumineuse mette un temps T (égal à la période des impulsions du train d'impulsions) pour parcourir l'anneau. A titre d'exemple cette cavité est réalisée à l'aide de miroirs M1, M2, M3.

Le milieu non linéaire 2 reçoit des impulsions du train d'impulsion. Ces impulsions tiennent lieu d'onde de pompe pour le milieu non linéaire 2. Une onde signal circulant dans la cavité, arrivant en coïncidence avec une onde pompe dans le milieu non linéaire, bénéficiera d'un transfert d'énergie de l'onde pompe vers l'onde signal.

Le commutateur électro-optique comporte un dispositif électro-optique commutateur de polarisation 3 ayant pour rôle de faire tourner la direction de polarisation de la lumière qu'il reçoit de 90°.

Le commutateur électro-optique 3 est par exemple à base de KTiP0₄ (appelé KTP) ou de KH₂ PO₄ ( appelé KDP) ou de LiNb0₃.

A ce commutateur électro-optique 3 est associé un dispositif biréfringent. Celui-ci transmet, selon le trajet de l'anneau 6, la lumière polarisée telle qu'elle est transmise par le milieu non linéaire 2 et il réfléchit vers une direction 7, la lumière polarisée à 90°.

Le dispositif de l'invention fonctionne comme cela est représenté en figure 4.

Une première impulsion P1 pénètre dans la cavité en anneau 6 par l'intermédiaire du milieu non linéaire 2. Par exemple, au démarrage du dispositif l'impulsion P1, tenant lieu d'onde pompe, permet d'amplifier un signal bruit SO préexistant dans la cavité optique. On a alors un mélange à deux ondes et une amplification par effet Raman.

L'impulsion résultante R1 a pour amplitude sensiblement l'amplitude I_{c} de l'impulsion P1 si on considère que l'amplitude du signal bruit SO est faible.

Cette impulsion parcourt l'anneau 6 de la cavité par réflexions successives sur les miroirs M2, M3, M1.

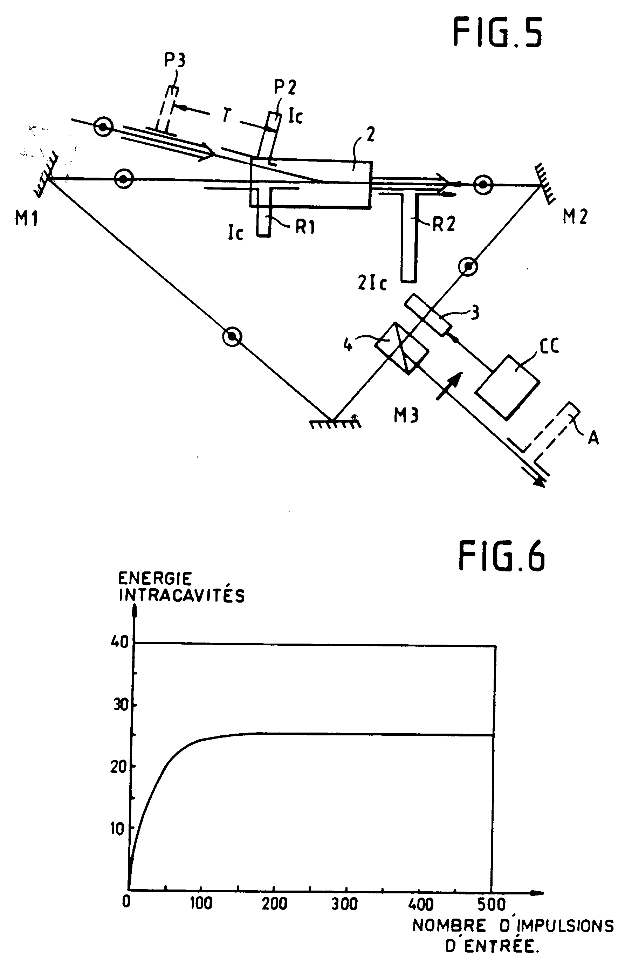

Le retard apporté par la cavité ou temps de parcours de l'anneau 6 par l'impulsion R1 est égal à T. Ainsi, comme cela est représenté en figure 5, l'impulsion R1 atteint le milieu non linéaire 2 au moment où une autre impulsion P2 atteint également ce même milieu. Par effet RAMAN, il y a transfert d'énergie de l'impulsion P2 (onde de pompe) vers l'impulsion R1 (onde signal). L'impulsion résultante R2 a sensiblement pour amplitude une valeur 2I_{c}.

Le processus ainsi décrit peut se reproduire plusieurs fois et l'impulsion résultante, à la sortie du milieu non linéaire 2, est amplifiée à chaque coïncidence d'une impulsion du type R1 et d'une impulsion du type P2, de la valeur d'une impulsion telle que P2.

La largeur de l'impulsion circulant dans la cavité en anneau 6 reste inchangée (par exemple t = 4 ps).

Par contre, la puissance crête de l'impulsion résultante se trouve multipliée par N à la énième impulsion PN.

On obtient ainsi une impulsion unique dont la puissance crête est NI_{c} et dont la largeur est celle d'une impulsion initiale.

L'extraction de cette impulsion intracavité peut être effectuée par l'intermédiaire d'un dispositif électrooptique commutateur de polarisation suivi d'un élément biréfringent (ou miroir diélectrique dont le coefficient de réflexion dépend de l'azimuth de polarisation de l'onde incidente par exemple R = 0 pour E// et R = Rmax pour E⊥).

Selon les schémas des figures 2 à 4, le faisceau issu du LEL (polarisation perpendiculaire) est incident sur le milieu non linéaire 2 utilisé dans la configuration pompe-sonde.

Le dispositif électrooptique commutateur de polarisation 3 fonctionne sous la commande d'un dispositif de commande CC à des temps déterminés permettant l'extraction d'une impulsion telle que R2. Par exemple si on désire une impulsion de puissance crête multipliée par N on commandera le dispositif électrooptique 3 à intervalles NT. La direction de polarisation de l'impulsion à extraire subira alors une rotation de 90°. Elle sera donc ensuite réfléchie par le dispositif biréfringent 4 vers la direction 7.

En ce qui concerne le milieu non linéaire 2 il convient de préciser que les intéractions Raman dans les gaz sont les mécanismes non linéaires les mieux adaptés à l'amplification et au transfert d'énergie d'impulsions courtes (ps) par mélange deux ondes pompe-sonde. Les caractéristiques d'une cellule amplificatrice Raman sont typiquement les suivantes :
- milieu non linéaire : CH₄
- seuil de non linéarié Raman = 1 cm Jcm⁻²
- pression de gaz : 50 bars
- coefficient de gain : X x 10¹² m W⁻¹
- temps de réponse : 10 ps
- décalage en fréquence : 3000 cm⁻¹

Le résonateur en anneau constitué de 3 miroirs à réflexion maximale à longueur d'onde émise par le milieu non linéaire 2.

Le commutateur de polarisation 3 peut être de type KDP ou de KTP ou LiNb0₃ dont le temps de réponse est inférieur à la durée d'une impulsion.

Une évaluation du gain en puissance crête d'une impulsion résultante en tenant compte des pertes de réflexion et de diffraction sur chaque miroir de la cavité, que nous avons fixé à 1 % environ par miroir a été faite.

Le milieu Raman est du gaz CH₄ sous pression. Si la longueur d'onde du train d'impulsions est de 1 µm, la longueur d'onde de l'impulsion stockée dans la cavité est alors de 1.5 µm. Le transfert d'énergie du train d'impulsions s'effectue en régime de saturation, et est donc très efficace de l'ordre de 80 %. La figure 6 représente un diagramme donnant l'énergie stockée dans la cavité en fonction du nombre d'impulsions du train d'impulsions reçues. On s'aperçoit que cette énergie sature à partir d'un nombre d'impulsions supérieur à 100. Dans ce cas, le rendement global de transfert d'énergie est d'environ 25 %. La puissance crête de l'impulsion géante ainsi créé est 25 fois celle de la microimpulsion d'entrée (200 MW), soit 5 GW. On obtient ainsi une puissance crête notablement amplifiée.

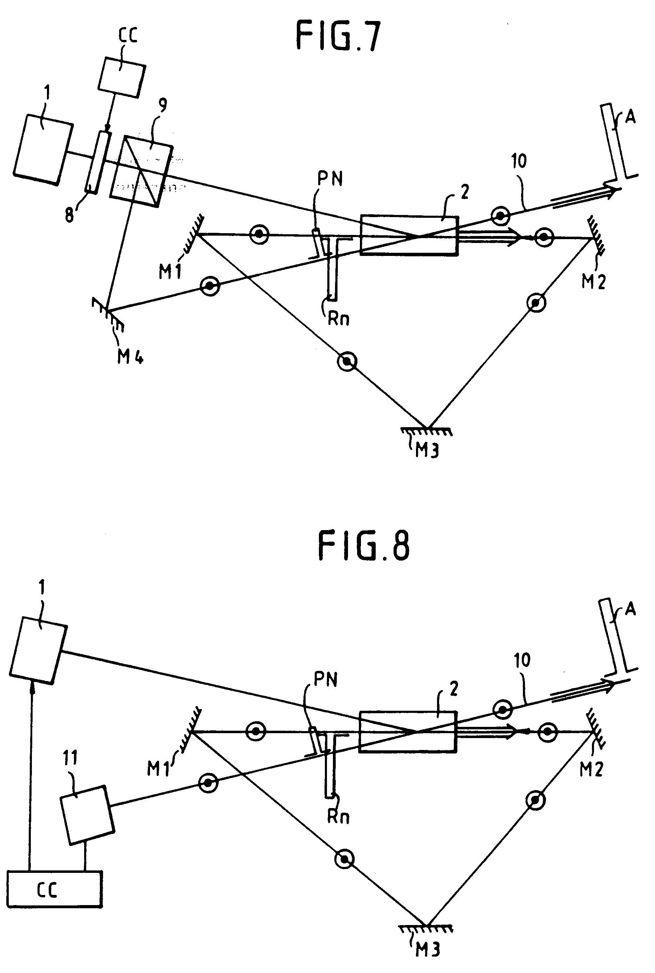

Selon une variante de l'invention, afin d'éviter l'emploi, dans la cavité optique 6 de commutateurs de polarisation électrooptiques et de composants biréfringents, il peut être souhaitable d'extraire l'énergie de la cavité par une interaction non linéaire à 2 ondes représentées sur la figure 7. Selon ce système, la dernière microimpulsion PN est dirigée par commutation de polarisation dans la direction angulaire symétrique par rapport à l'onde pompe circulant dans la cavité. Cette onde est translatée en fréquence et après intéraction 2 ondes l'énergie circulant intracavité est transférée dans la nouvelle direction 10 de l'onde pompe.

Sur la figure 7, on trouve donc un dispositif de commutation de polarisation 8 disposé sur le trajet des impulsions issues de la source 1. Un dispositif biréfringent 9 permet de transmettre les impulsions de la source 1 soit directement au milieu non linéaire 2 comme cela a été décrit précédemment. Lorsque l'on veut extraire un impulsion de la cavité 6, le circuit de commande CC commande la rotation de 90° de la direction de polarisation d'au moins une impulsion PN.

Le dispositif biréfringent 9 réfléchit cette impulsion PN, par l'intermédiaire d'un miroir M4, sous un angle tel par rapport à la direction, dans le milieu 2, du trajet des impulsions intracavités que cette impulsion PN tient lieu d'onde signal. Une impulsion Rn arrivant en coïncidence dans le milieu 2 tient lieu alors d'onde de pompe et un transfert d'énergie se produit de l'impulsion Rn vers l'impulsion PN. On peut donc extraire, selon une direction 10 située dans le prolongement de la direction de l'impulsion PN, une impulsion A amplifiée.

De façon équivalente l'énergie peut être extraite de la cavité comme cela est représenté en figure 8 par l'intermédiaire d'une autre source laser 11 émettant une impulsion unique de faible énergie. Le milieu non linéaire transfert l'énergie intracavité dans la direction de ce faisceau sonde. L'incidence et la fréquence de ce laser sont choisis pour optimiser le gain de l'intéraction à 2 ondes. Les sources 1 et 11 sont commandées par un circuit de commande CC de façon que les impulsions de la source 1 permettent l'amplification d'une impulsion intracavité et que les impulsions de la source 11 permettent, comme cela est représenté en figure 8 et comme cela a été dit précédemment, d'extraire une impulsion amplifiée à un instant déterminé.

Dans ce qui précède on a considéré que la source lumineuse 1 émet de la lumière polarisée linéairement. Dans les différentes branches du circuit optique des figures qui viennent d'être décrites la direction de polarisation est indiquée par un petit cercle contenant un point et les différentes directions de polarisation sont parallèles entre-elles.

Le dispositif présenté permet donc de générer une impulsion laser unique à partir d'un train de N micropulses. La puissance crête de l'impulsion est dans ces conditions égale à N fois la puissance crête de l'impulsion élémentaire. L'invention s'applique aux équipements optroniques nécessitant des lasers de très haute puissance crête (lasers types LEL Ou lasers solides à bloquage de modes : impulsions de 10 à 100 ps séparées de 10 ns).

Il est bien évident que la description qui précède a été faite qu'à titre d'exemple non limitatif et que d'autres variantes peuvent être envisagées sans sortir du cadre de l'invention. Les exemples numériques et la nature des matériaux indiqués n'ont été fournis que pour illustrer la description.

## Revendications

1. Générateur d'impulsion laser de puissance caractérisé en ce qu'il comporte :
- une source laser (1) émettant au moins un train d'impulsions (F1) de période T ;
- une cavité optique en anneau (6) de longueur proportionnelle à la période T du train d'impulsions ;
- un milieu non linéaire (2) inséré dans l'anneau de la cavité optique (6) recevant le train d'impulsions (F1) qui fait office de faisceau de pompe pour le milieu non linéaire, la lumière circulant dans la cavité faisant office de faisceau signal ;
- un commutateur électro-optique de polarisation (3) commandé par un circuit de commande (CC) et un dispositif biréfringent (4) intégrés dans l'anneau de la cavité optique (6) et fonctionnant à des instants déterminés pour extraire une impulsion lumineuse de la cavité optique.

2. Générateur d'impulsion laser de puissance caractérisé en ce qu'il comporte :
- une source laser (1) émettant au moins un train d'impulsions (F1) de période T ;
- une cavité optique en anneau (6) de longueur proportionnelle à la période T du train d'impulsions ;
- un milieu non linéaire (2) inséré dans l'anneau de la cavité optique (6) recevant le train d'impulsions (F1) qui fait office de faisceau de pompe pour le milieu non linéaire, la lumière circulant dans la cavité faisant office de faisceau signal ;
- un commutateur optique recevant les impulsions de la source (1) et les retransmettant, sous la commande d'un circuit de commande (CC), au milieu non linéaire (2) sous un angle tel que ces impulsions tiennent lieu de faisceau signal tandis que des impulsions circulant dans la cavité optique tiennent lieu de faisceau pompe, un transfert d'énergie (6) ayant alors lieu des impulsions de la cavité vers les impulsions de la source.

3. Générateur d'impulsion laser de puissance caractérisé en ce qu'il comporte :
- une source laser (1) émettant au moins un train d'impulsions (F1) de période T ;
- une cavité optique en anneau (6) de longueur proportionnelle à la période T du train d'impulsions ;
- un milieu non linéaire (2) inséré dans l'anneau de la cavité optique (6) recevant le train d'impulsions (F1) qui fait office de faisceau de pompe pour le milieu non linéaire, la lumière circulant dans la cavité faisant office de faisceau signal ;
- une source laser supplémentaire (11) émettant des impulsions laser vers le milieu non linéaire sous un angle tel que ces impulsions tiennent lieu de faisceau signal et que les impulsions circulant dans la cavité optique (6) tiennent lieu de faisceau pompe, un circuit de commande (CC) commandant sélectivement la source laser (1) et la source laser supplémentaire (11).

4. Générateur d'impulsion selon la revendication 1, caractérisé en ce que le commutateur électro-optique de polarisation est à base de KDP, KTP ou de LiNb0_{3.}

5. Générateur d'impulsion selon l'une des revendications 1 à 3, caractérisé en ce que le milieu non linéaire (2) est une cellule à gaz sous-pression.

6. Générateur d'impulsion selon la revendication 5, caractérisé en ce que le gaz de la cellule sous pression est du CH4^{.}

7. Générateur d'impulsion selon l'une des revendications 1 à 3, caractérisé en ce que la source laser (1) émet des impulsions de lumière polarisée linéairement.

## Patentansprüche

1. Generator für Hochleistungslaserimpulse, dadurch gekennzeichnet, daß er umfaßt:
- eine Laserquelle (1), die wenigstens einen Impulszug (F1) mit der Periode T emittiert;
- einen ringförmigen optischen Hohlraum (6) mit einer zur Periode T des Impulszuges proportionalen Länge;
- ein nichtlineares Medium, das in den Ring des optischen Hohlraums (6) eingefügt ist und den Impulszug (F1) empfängt, der für das nichtlineare Medium als Pumpstrahl dient, wobei das im Hohlraum zirkulierende Licht als Signalstrahl dient;
- einen von einer Steuerschaltung (CC) gesteuerten elektrooptischen Polarisationsumschalter (3) und eine doppelbrechende Einrichtung (4), die in den Ring des optischen Hohlraums (6) integriert sind und in bestimmten Zeitpunkten arbeiten, um aus dem optischen Hohlraum einen Lichtimpuls zu entnehmen.

2. Generator für Hochleistungslaserimpulse, dadurch gekennzeichnet, daß er umfaßt:
- eine Laserquelle (1), die wenigstens einen Impulszug (F1) der Periode T emittiert;
- einen ringförmigen optischen Hohlraum (6) mit einer zur Periode T des Impulszuges proportionalen Länge;
- ein nichtlineares Medium (2), das in den Ring des optischen Hohlraums (6) eingefügt ist und den Impulszug (F1) empfängt, der für das nichtlineare Medium als Pumpstrahl dient, wobei das im Hohlraum zirkulierende Licht als Signalstrahl dient;
- einen optischen Umschalter, der die Impulse von der Quelle (1) empfängt und diese unter der Steuerung einer Steuerschaltung (CC) an das nichtlineare Medium (2) unter einem solchen Winkel überträgt, daß diese Impulse die Stelle des Signalstrahls einnehmen, während die im optischen Hohlraum zirkulierenden Impulse die Stelle des Pumpstrahls einnehmen, wobei dann eine Energieübertragung (6) von den Impulsen des Hohlraums zu den Impulsen der Quelle stattfindet.

3. Generator für Hochleistungslaserimpulse, dadurch gekennzeichnet, daß er umfaßt:
- eine Laserquelle (1), die wenigstens einen Impulszug (F1) mit der Periode T emittiert;
- einen ringförmigen optischen Hohlraum (6) mit einer zur Periode T des Impulszuges proportionalen Länge;
- ein nichtlineares Medium, das in den Ring des optischen Hohlraums (6) eingefügt ist und den Impulszug (F1) empfängt, der für das nichtlineare Medium als Pumpstrahl dient, wobei das im Hohlraum zirkulierende Licht als Signalstrahl dient;
- eine zusätzliche Laserquelle (11), die Laserimpulse zum nichtlinearen Medium in einem solchen Winkel emittiert, daß diese Impulse die Stelle des Signalstrahls einnehmen und daß die in dem optischen Hohlraum (6) zirkulierenden Impulse die Stelle des Pumpstrahls einnehmen, wobei eine Steuerschaltung (CC) wahlweise die Laserquelle (1) und die zusätzliche Laserquelle (11) steuert.

4. Impulsgenerator gemäß Anspruch 1, dadurch gekennzeichnet, daß der elektrooptische Polarisationsumschalter auf KDP, KTP oder LiNeO₃ basiert.

5. Impulsgenerator gemäß einem der Ansprüche 1 bis 3, dadurch gekennzeichnet, daß das nichtlineare Medium (2) eine Zelle mit unter Druck stehendem Gas ist.

6. Impulsgenerator gemäß Anspruch 5, dadurch gekennzeichnet, daß das unter Druck stehende Gas der Zelle CH₄ ist.

7. Impulsgenerator gemäß einem der Ansprüche 1 bis 3, dadurch gekennzeichnet, daß die Laserquelle (1) linear polarisierte Lichtimpulse emittiert.

## Claims

1. Power laser pulse generator characterized in that it contains:
- a laser source (1) emitting at least one train of pulses (F1) of period T;
- an optical ring cavity (6) of length proportional to the period T of the train of pulses;
- a non-linear medium (2) inserted into the ring of the optical cavity (6) receiving the train of pulses (F1) which acts as a pump beam for the non-linear medium, the light circulating in the cavity acting as a signal beam;
- an electrooptical polarization switch (3) controlled by a control circuit (CC) and a birefringent device (4) which are integrated into the ring of the optical cavity (6) and operating at determined instants in order to extract a light pulse from the optical cavity.

2. Power laser pulse generator characterized in that it contains:
- a laser source (1) emitting at least one train of pulses (F1) of period T;
- an optical ring cavity (6) of length proportional to the period T of the train of pulses;
- a non-linear medium (2) inserted into the ring of the optical Cavity (6) receiving the train of pulses (F1) which acts as a pump beam for the non-linear medium, the light circulating in the cavity acting as a signal beam;
- an optical switch receiving the pulses from the source (1) and retransmitting them, under the control of a control circuit (CC), to the non-linear medium (2) at an angle such that these pulses take the place of the signal beam while pulses circulating in the optical cavity take the place of the pump beam, a transfer of energy (6) then taking place from the pulses of the cavity to the pulses of the source.

3. Power laser pulse generator characterized in that it contains:
- a laser source (1) emitting at least one train of pulses (F1) of period T;
- an optical ring cavity (6) of length proportional to the period T of the train of pulses;
- a non-linear medium (2) inserted into the ring of the optical cavity (6) receiving the train of pulses (F1) which acts as a pump beam for the non-linear medium, the light circulating in the cavity acting as a signal beam;
- an additional laser source (11) emitting laser pulses towards the non-linear medium at an angle such that these pulses take the place of the signal beam and that the pulses circulating in the optical cavity (6) take the place of the pump beam, a control circuit (CC) selectively controlling the laser source (1) and the additional laser source (11).

4. Pulse generator according to Claim 1, characterized in that the electrooptical polarization switch is based on KDP, KTP or on LiNbO₃.

5. Pulse generator according to one of Claims 1 to 3, characterized in that the non-linear medium (2) is a pressurized gas cell.

6. Pulse generator according to Claim 5, characterized in that the gas of the pressurized cell is CH₄.

7. Pulse generator according to one of Claims 1 to 3, characterized in that the laser source (1) emits pulses of linearly polarized light.
